# EUROPÄISCHE PATENTSCHRIFT

(11) **EP 3 824 115 B1**
(45) Veröffentlichungstag und Bekanntmachung des Hinweises auf die Patenterteilung: **09.03.2022**
(21) Anmeldenummer: 19733451.9
(22) Anmeldetag: 21.06.2019
(51) Int. Cl.: C23G 1/08, B21B 45/06, C23G 3/02

(54) **BEIZANLAGE ZUR OBERFLÄCHENBEHANDLUNG VON BANDSTAHL**
PICKLING PLANT FOR SURFACE TREATMENT OF STRIP STEEL
SYSTÈME DE TEINTURE POUR LE TRAITEMENT DE SURFACE DE BANDE D'ACIER

(30) Priorität: 19.07.2018 DE 102018117475
(43) Veröffentlichungstag der Anmeldung: 26.05.2021
(73) Patentinhaber: SMS group GmbH, 40237 Düsseldorf (DE)
(72) Erfinder: HAENTJES, Michael, 45257 Essen (DE)
(74) Vertreter: Kross, Ulrich
(86) Internationale Anmeldenummer: PCT/EP2019/066429
(87) Internationale Veröffentlichungsnummer: WO 2020/015950

(56) Entgegenhaltungen:
- WO-A1-2017/104926
- DE-A1- 10 332 693
- DE-U1- 9 211 632
- JP-A- S57 104 671
- JP-A- S61 235 583

## Beschreibung

Die Erfindung betrifft eine Beizanlage zur Oberflächenbehandlung von Bandstahl als Normalstahl, Elektroband, Edelstahl und extra- und ultrahochfestem Stahl der dritten Generation, um hierdurch eine sich daran anschließende für weiterverarbeitende Prozessschritte geeignete Oberfläche zu schaffen, umfassend eine Vielzahl von in Reihe geschalteten, mit einem Beizmedium beaufschlagbaren Behandlungstanks.

Als Stähle der dritten Generation werden vorliegend QP-Stahl und Mittelmanganstahl als extra- und ultrahochfeste Stähle angesehen. Als weiterverarbeitende Prozessschritte werden vorliegend insbesondere das Walzen, Tiefziehen, Tauchbadverzinken, Feuerverzinken u.dgl. angesehen.

Bei sog. Warmband kommt es während des Walzprozesses unweigerlich zu einer Zunderschichtbildung auf der Bandoberfläche. Dieser Zunder hat, je nach Legierung, auch eine bestimmte Zusammensetzung. Diese Zunderschicht muss auch aus Gründen der Qualitätssicherung des Endproduktes vor der Weiterverarbeitung entfernt werden. Hierzu haben sich Beizanlagen bewährt, die die Zunderschicht mittels eines Beizmediums entfernen. Mit Hilfe mechanischer Unterstützung (Bedüsung der Bandoberfläche und Turbulenzen im Beizbad) ist man in der Lage, regelmäßig ein gutes Beizergebnis für eine bestimmte Stahlgüte zu erreichen.

Heutige Beizsektionen sind flach ausgelegt (beispielsweise als Turbulenzbeize), die aus mehreren Zwischentanks bestehen. Das Stahlband wird durch die Behandlungstanks gezogen oder geschoben. Die komplette Beizsektion ist als eine Kaskade aufgebaut, d. h. die frische oder regenerative Säure wird dem letzten Behandlungstank (d. h. gemäß der Bewegungsrichtung des Stahlbandes) hinzugefügt und wird dann in Gegenrichtung zur Bandtransportrichtung auf das Band aufgegeben, um die Wirkung der Beizsäure zu maximieren. Am Eingang und Ausgang der Behandlungstanks, sind Abquetschrollen installiert, die die Beizsäure vom Behandlungsgut abstreifen. Diese Technologie ist beispielsweise in der Offenlegungsschrift DE 40 31 234 beschrieben.

Aus der DE 42 28 808 A1 ist eine Vorrichtung bekannt, der ebenfalls Spritzbeizmodule zugeordnet sind. Der Nachteil des Spritzbeizens kann darin gesehen werden, dass die Oberfläche des behandelten bandförmigen Walzgutes aufgrund des größeren, jedoch unterschiedlichen Abtrages der Oxidschicht verhältnismäßig rau ist. Gelegentlich kommt es auch zu Lochfraß bzw. einer Anätzung im Bereich der Korngrenzen, wodurch die Oberflächenbeschaffenheit des bandförmigen Behandlungsgutes weiter verschlechtert wird. Für die übliche Weiterverarbeitung wie Kaltwalzen, Glühen und/oder Verzinken können solche Oberflächen zu Problemen führen (beispielsweise Bandrisse beim Kaltwalzen) bis hin zu Qualitätseinbußen beim Endprodukt. Der für eine Spritzbehandlung von bandförmigem Behandlungsgut erforderliche apparative Aufwand ist verhältnismäßig hoch und auch die Spritzdüsen verschleißen in verhältnismäßig kurzer Zeit, was mit einem hohen Wartungsbedarf einhergeht.

Jede der Druckschriften DE 103 32 693 A1, DE 92 11 632 U1, WO 2017/104926 A1 offenbart eine Beizanlage zur Oberflächenbehandlung eines Bandstahls, welche modular aufgebaut ist und vom Bandeinlauf in Arbeitsrichtung ein erster Tauchbadbeizmodul, ein Spritzbeizmodul und ein abschließendes zweites Tauchbadbeizmodul umfasst.

Au der JP S61 235583 A ist eine Beizanlage zur Oberflächenbehandlung eines Bandstahls bekannt, welche modular aufgebaut ist und vom Bandeinlauf in Arbeitsrichtung ein erster Tauchbadbeizmodul und eine Vielzahl von Spritzbeizmodulen umfasst.

Bei den konventionellen Beizanlagen kann die Beizwirkung allerdings nur durch Anpassen von Beiztemperatur und Beizbadkonzentration variiert werden. Diese Parameter sind allerdings äußerst träge und erlauben daher keine Anpassung in einem Zeitrahmen, der heutigen Ansprüchen an eine hohe Anlagenflexibilität genügen würde.

Bei den bekannten Beizanlagen, insbesondere für Normalstahl, ist die Anforderung speziell an die Oberflächenqualität stetig gestiegen. Speziell in den Produktionsschritten Kaltwalzen und Verzinken resultieren Defizite in der Oberflächenqualität beim Beizen automatisch in Problemen am Endprodukt. Der Beizvorgang ist im Wesentlichen ein Diffusionsvorgang in der laminaren Grenzschicht und hier sind die Stellparameter Beizbadkonzentration und Beizbadtemperatur die geschwindigkeitsbestimmenden Parameter. Beide Parameter können in der Realität nur äußerst träge angepasst werden. Bei der Beizbadkonzentration besteht ein Interesse an einer konstanten Parameterführung, um die Verbräuche an Beizmedien zu optimieren, indem zum einen die Übergabeparameter zu einer Säureregeneration weitestgehend konstant gehalten und zum anderen die Metallgehalte im ersten Beizbad hoch gehalten werden, um die Altsäuremengen entsprechend zu optimieren, sprich zu minimieren. Die Beizbadtemperatur kann nur im Rahmen von 1 bis 2°C/min angepasst werden, was dazu führt, dass die Anpassungen an einzelne Produktionscoils mit minimalen Coillaufzeiten (2 bis 3 Minuten) praktisch nicht realisierbar sind. Dies alles führt dazu, dass die bekannten Beizsysteme den aktuellen Anforderungen, insbesondere an den neuen höherfesten Stählen, nicht mehr gerecht werden können.

Aufgabe der vorliegenden Erfindung ist es demnach eine Beizanlage zu schaffen, die auf unterschiedliche Produktionscoils sowie deren unterschiedlichen Stahlgüten flexibel einstellbar ist.

Diese Aufgabe wird durch Anspruch 1 gelöst, dass die Beizanlage modular aufgebaut ist und vom Bandeinlauf in Arbeitsrichtung mindestens ein erster Behandlungstank als Tauchbadmodul vorgesehen ist, dem nachgeschaltet eine Vielzahl von Behandlungstanks der Art von Spritzbeizmodulen angeordnet sind und den Spritzbeizmodulen mindestens ein abschließendes zweites Tauchbadmodul nachgeschaltet ist.

Hierdurch wird eine Beizanlage geschaffen, die höchstmögliche Flexibilität hinsichtlich der Beizwirkung bietet, da durch die zu- und abschaltbaren Spritzbeizmodule die Beizstrecke und damit auch die Behandlungszeit flexibel auf das zu behandelnde Band einstellbar ist. Somit können in einer Beizanlage unterschiedliche Stahlgüten unmittelbar hintereinander behandelt werden, ohne dass dabei Umbauarbeiten und Anpassungen an der Beizanlage notwendig wären. Insbesondere die vorgesehenen Spritzbeizzellen bieten die Möglichkeit, die laminare Grenzschicht zwischen Beizlösung und Metalloberfläche möglichst klein zu halten. Damit werden die dort stattfindenden Diffusionsvorgänge nicht nur durch erhöhten Stoffaustausch und besseren Wärmeübergang optimiert, sondern auch die eigentliche Übertragungslänge und damit die Behandlungszeit verkürzt.

Es hat sich gezeigt, dass es bei dem zu behandelndem Bandmaterialien nach der Spritzbeizbehandlung zu einer Streifenbildung auf der Bandoberfläche kommen kann, was wiederum zu Problemen bei den darauffolgenden Verarbeitungsprozessen (Kaltwalzen, Verzinken, etc.) führen könnte. Daher ist es erfindungsgemäß vorgesehen, vor und hinter dem eigentlichen Spritzbeizen Beizbäder anzuordnen. Das vorgeschaltete Beizbad soll dabei das bandförmige Beizgut entsprechend vorwärmen und mögliche Verschmutzungen und unlösliche Bestandteile von der Bandoberfläche entfernen und damit sicherzustellen, dass im darauf folgenden Spritzbeizprozess eine weitgehend saubere Beizflüssigkeit zur Verfügung steht und damit ein Verstopfen der Spritzdüsen verhindert werden kann. Das hieran nachgeschaltete Beizbad erzeugt eine homogene Bandoberfläche, in dem mögliche Streifenbildungen etc. durch diesen Prozessschritt egalisiert werden können. Beide Beizbäder erlauben das komplette oder individuelle An-/Abschalten der Spritzmodule im Betrieb der Beizanlage und damit eine nahezu komplette Flexibilisierung der Behandlungszeit (Beizzeit) im Rahmen dieser variabel vorgesehenen Behandlungslängen.

Im Nachfolgenden wird die Funktionen des ersten Beizbades in der Ausführung als ein Turbulenzbeiztank näher beschrieben.
→ Vorwärmen des Stahlbands. Durch die geringe Konzentration an freier Säure (30-40 g HCl/I) in diesem Tank ist die Beizwirkung nur gering und das Bad fungiert hauptsächlich als Vorwärmung.
→ Schlammanfall. Auf Grund der hohen Metallkonzentration in diesem Bad (120-140 g Fe/I) sind in diesem Beizbad auch die anderen Metalle und deren Oxide (Si etc.) in höchster Konzentration vertreten und damit auch die unlöslichen Bestandteile stärker vorhanden. Daher ist ein reiner Spritzbeizbetrieb in diesem Bereich generell nur eingeschränkt vorstellbar.

Im Nachfolgenden wird die Funktion des zweiten Beizbades in der Ausführung als ein Turbulenzbeiztank näher beschrieben.
→ Durch den Turbulenzbeiztank werden durch das Spritzbeizen verursachte Streifenbildungen egalisiert und ein einheitliches Erscheinungsbild der gebeizten Oberfläche wird eingestellt
→ Auch erlaubt dieser Beiztank, dass die vorgeschalteten Spritzbeizzellen auch komplett außer Betrieb gesetzt werden können und trotzdem ein für die zu behandelnde Stahlgüte gutes Beizergebnis erreicht wird (minimale Bandgeschwindigkeit/Beizwirkung).

Nachfolgend wird die Funktion der Spritzbeizmodule in der erfindungsgemäßen modular aufgebauten Beizanlage zusammenfassend wiedergegeben.
→ Flexibelste Anpassung der Beizwirkung: durch das Zu-/Abschalten der einzelnen Module mittels Schaltventilen lässt sich die Beizwirkung eines jeden individuellen Moduls schlagartig anpassen.
→ Beste Beizwirkung: aufgrund der optimalen Konzentrationsbereiche in diesem Bad sind hier auch beste Beizraten zu erwarten. Zudem ist der Stoff- und Wärmeaustausch beim Spritzen entsprechend am Höchsten.
→ Auch ein potentielles Verstopfen ist durch geeignete Düsenauswahl und die vorliegenden Konzentrationsverhältnisse vermeidbar.
→ Durch den Einsatz der Module wird die Gesamtbeizzeit, verglichen mit der konventionellen Turbulenzbeize, verkürzt.

Es ist dabei vorgesehen, weitestgehend baugleiche bzw. ähnliche Spülzellen zu verwenden.
→ Bandunterstützung zwischen den Zellen mittels Rollen oder eventuell Granitsteinen ist vorgesehen.
→ Die einzelnen Module können aus einem Zirkulationstank oder integrierten Vorlagen mit Beizmedium versorgt werden.

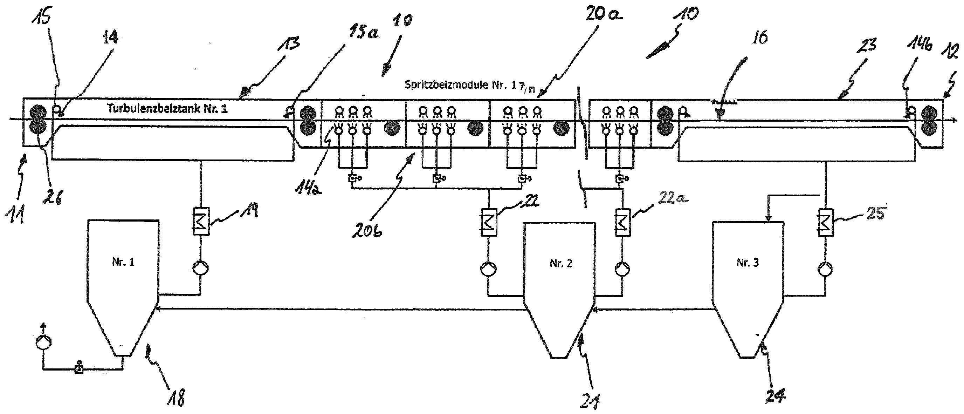

Die Erfindung wird im Folgenden anhand einer beispielhaften Ausführungsform unter Bezugnahme auf die beigefügte einzige Figur näher erläutert.

Die einzige Figur ist eine schematische Darstellung einer erfindungsgemäßen modular aufgebauten Beizanlage (Beizteil).

Wie in der Figur dargestellt, ist die erfindungsgemäße Beizanlage (10) modular aufgebaut. Vom Bandeinlauf (11) in Arbeitsrichtung zum Bandauslauf (12) ist ein erstes Tauchbadmodul (13) vorgesehen. Das Tauchbadmodul (13) ist in dieser Ausführungsform als ein Turbulenzbeiztank ausgebildet, bei dem ein Beizmedium (14) über Sprühbalken (15, 15a) in den Einlauf-, Auslauf- und Seitenteilen auf ein zu behandelndes Band (16) aufgegeben wird. Das Beizmedium (14) wird in einem ersten Zirkulationsbehälter(18) bevorratet und bedarfsgerecht über entsprechende Zu- und Ableitungen dem Turbulenztank (13) zugeführt. Zur Einstellung der Temperatur des Beizmediums (14) ist ein Wärmetauscher (19) vorgesehen. Der Turbulenzbeiztank (13) hat nur ein geringes Volumen und durch den Tankboden werden Schlammablagerungen niedrig gehalten. Ein Tauchdeckel (nicht dargestellt) bildet die Oberseite des Beizkanals, der den Turbulenzbeiztank (13) wirksam abdichtet. Das bringt einen geringeren Verdampfungsverlust und erhebliche Einsparungen, weil die Beizanlage somit deutlich weniger Energie und Beizmedium (Säure) verbraucht.

Dem ersten Turbulenztank (13) ist mindestens ein Spritzbeizmodul (17) nachfolgend in Arbeitsrichtung angeschlossen. Das Beizmedium (Säure) wird aus einer Vielzahl von Düsen bzw. Sprühlanzen (20, 20a, 20b), die über die Breite des Bandes (16) verteilt angeordnet sind, in Einbaulage von oben und von unten mit hoher Geschwindigkeit auf das Band (16) gespritzt. Auf diese Weise wird bereits beim Aufprall des Beizmediums auf das Band (16) ein Großteil des Zunders mechanisch entfernt. Es ist vorgesehen, dass eine Vielzahl von Spritzmodulen (n) in Reihe geschaltet werden können, um so die Spritzbeizmodulstrecke in der Länge auch den Platzverhältnissen am Aufstellort individuell anpassen zu können. Das bzw. die Spritzbeizmodule (17, n) werden über einen zweiten Zirkulationsbehälter (21) mit frischem oder aufbereitetem Beizmedium (14a) versorgt. Auch hier sind Wärmetauscher (22, 22a) vorgesehen, die die Temperatur des Beizmediums (14a) regeln können.

Den Abschluss dieser modular aufgebauten Beizanlage bildet ein zweites Tauchbadmodul (23), das in dieser Ausführungsform ebenfalls als Turbulenzbeiztank ausgebildet ist und das Band (16) abschließend mit einem Beizmedium (14b) behandelt. Das Beizmedium (14b) wird dabei in einem dritten Zirkulationstank (24) bevorratet und bedarfsgerecht dem Turbulenzbeiztank (23) über entsprechende Zu- und Ableitungen zur Verfügung gestellt. Auch hier kann die Temperatur der des Beizmediums (14b) mittels Wärmetauscher (25) eingestellt werden. Das Band (16) wird über die gesamte Länge der Beizanlage (10) mittels Stütz- und/oder Abquetschrollen (26) vom Einlauf (11) bis zum Auslauf (27) gehalten. Der Übersichtlichkeit halber sind in der Figur nur eine Stütz- und/oder Abquetschrolle (26) mit dem entsprechenden Bezugszeichen versehen worden. Es gilt, gleiche Bauteile erhalten gleiche Bezugszeichen.

### Bezugszeichenliste

- 10: Beizanlage (Beizteil)
- 11: Bandeinlauf
- 12: Bandauslauf
- 13: erstes Tauchbadmodul (Turbulenzbeiztank)
- 14, 14a, 14b: Beizmedium (Säure)
- 15, 15a: Sprühbalken (Düsen)
- 16: Band
- 17, n: Spritzbeizmodul
- 18: erster Zirkulationsbehälter für das Beizmedium
- 19: Wärmetauscher
- 20, 20a, 20b: Sprühlanzen (Düsen)
- 21: zweiter Zirkulationsbehälter für das Beizmedium
- 22, 22a: Wärmetauscher
- 23: zweites Tauchbadmodul (Turbulenzbeiztank)
- 24: dritter Zirkulationsbehälter für das Beizmedium
- 25: Wärmetauscher
- 26: Stütz- und/oder Abquetschrollen (Bandunterstützung)

## Patentansprüche

1. Beizanlage (10) zur Oberflächenbehandlung mit einem Beizmedium (14, 14a, 14b) für Bandstahl (16) als Normalstahl, Elektroband, Edelstahl und extra- und ultrahochfestem Stahl der dritten Generation, um hierdurch für eine sich daran anschließende weiterverarbeitende Formgebung geeignete Oberfläche zu schaffen, umfassend eine Vielzahl von in Reihe geschalteten Behandlungstanks(13, 17, 23), wobei
die Beizanlage (10) modular aufgebaut ist und vom Bandeinlauf (11) in Arbeitsrichtung mindestens ein erster Behandlungstank als Tauchbadmodul (13) vorgesehen ist, dem nachgeschaltet eine Vielzahl von Behandlungstanks der Art von Spritzbeizmodulen (17,n) angeordnet sind und den Spritzbeizmodulen (17, n) mindestens ein abschließendes zweites Tauchbadmodul (23) nachgeschaltet ist, **dadurch gekennzeichnet,**
**dass** die Spritzbeizmodule (17, n) einzeln und zeitlich unabhängig voneinander ansteuerbar sind und die Beaufschlagungsdauer des zu behandelnden Bandes (16) mit dem Beizmedium (14a) in Abhängigkeit von dessen Stahlgüte individuell einstellbar ist und dass die Spritzbeizmodule (17, n) in Anzahl und/oder Spritzintensität in Abhängigkeit von der zu behandelnden Stahlgüten des zu behandelnden Bandes (16) individuell zu- und abschaltbar sind.

2. Beizanlage nach Anspruch 1, **dadurch gekennzeichnet,**
**dass** die Spritzbeizmodule (17, n) weitestgehend baugleiche Spritzbeizzellen sind, die aus mindestens einem Zirkulationstank (21) oder integrierten Vorlagen mit dem Beizmedium (14a) versorgbar sind.

3. Beizanlage nach Anspruch 2,
**dadurch gekennzeichnet, dass** zwischen den Spritzbeizzellen (17, n) eine Bandunterstützung (26) mittels Rollen oder Granitsteinen vorgesehen ist.

4. Beizanlage nach einen oder mehreren der Ansprüche 1 bis 2, **dadurch gekennzeichnet,**
**dass** das erste und zweite Tauchbadmodul Turbulenzbeiztanks (13, 23) sind.

5. Beizanlage nach Anspruch 4,
**dadurch gekennzeichnet,**
**dass** mindestens im ersten Turbulenzbeiztank (13) die Konzentration an freier Säure (14) im Bereich von 30-40 g HCl/I liegt, sodass die Beizwirkung auf ein zu behandelndes Band gering ist.

6. Beizanlage nach Anspruch 5,
**dadurch gekennzeichnet,**
**dass** der erste Turbulenzbeiztank (13) eine Bandvorwärmung ist.

7. Beizanlage nach Anspruch 6,
**dadurch gekennzeichnet,**
**dass** in dem ersten Turbulenztank (13) die groben unlöslichen Bestandteile des von der Oberfläche des Bandes (16) stammenden Zunders vor dem Einlauf des Bandes (16) in die nachgeschalteten Spritzbeizzellen (17, n) entfernt sind

## Claims

1. Pickling plant (10) for surface treatment with a pickling medium (14, 14a, 14b) for strip steel (16) as normal steel, electrical steel strip, stainless steel and extra-high-strength and ultra-high-strength steel of the third generation in order to thereby create a surface suitable for subsequent shaping by further processing, comprising a plurality of treatment tanks (13, 17, 23) connected in series, wherein
the pickling plant (10) is of modular construction and at least one first treatment tank as immersion bath module (13) is provided in working direction from the strip entry (11), a plurality of treatment tanks in the form of spray pickling modules (17, n) being arranged downstream of the module and at least one closing-off second immersion bath module (23) being downstream of the spray pickling modules (17, n), **characterised in that**
the spray pickling modules (17, n) are activatable individually and independently of one another in time and the duration of action on the strip (16), which is to be treated, by the pickling medium (14a) is individually settable in dependence on the steel quality thereof and that the spray pickling modules (17, n) can be individually switched on and off in number and/or spray intensity in dependence on the steel qualities, which are to be treated, of the strip (16) to be treated.

2. Pickling plant according to claim 1, **characterised in that** the spray pickling modules (17, n) are to the largest extent constructionally identical spray pickling cells which can be supplied with the pickling medium (14a) from at least one circulation tank (21) or integrated run-down tanks.

3. Pickling plant according to claim 2, **characterised in that** a strip support (26) by means of rollers or granite blocks is provided between the spray pickling cells (17, n).

4. Pickling plant according to one or more of claims 1 and 2, **characterised in that** the first and second immersion bath modules are turbulence pickling tanks (13, 23).

5. Pickling plant according to claim 4, **characterised in that** the concentration of free acid (14) at least in the first turbulence pickling tank (13) lies in the range of 30 to 40 g HCI/I so that the pickling action on a strip to be treated is small.

6. Pickling plant according to claim 5, **characterised in that** the first turbulence pickling tank (13) is a strip preheater.

7. Pickling plant according to claim 6, **characterised in that** in the first turbulence tank (13) the coarse undissolved constituents of the scale originating from the surface of the strip (16) are removed prior to entry of the strip (16) into the downstream spray pickling cells (17, n).

## Revendications

1. Installation de décapage (10) à des fins de traitement superficiel avec un milieu de décapage (14, 14a, 14b) destiné à de l'acier en bande (16) sous la forme d'acier doux, d'un feuillard électrique, d'acier résistant à la corrosion et d'acier à extra- et ultra-haute résistance de la troisième génération, pour ainsi obtenir une surface qui est appropriée pour un façonnement de transformation ultérieure qui s'y rapporte, qui comprend une multitude de cuves de traitement montées en série (13, 17, 23) ; dans laquelle
l'installation de décapage (10) présente une structure modulaire et, à partir de l'entrée de la bande (11), dans la direction de travail, est prévue au moins une première cuve de traitement sous la forme d'un module faisant office de bain d'immersion (13), à la suite de laquelle sont disposées une multitude de cuves de traitement du type de modules de décapage par pulvérisation (17, n), et enfin au moins un deuxième module (23) faisant office de bain d'immersion est monté à la suite des modules de décapage par pulvérisation (17, n), **caractérisée**
**en ce que** les modules de décapage par pulvérisation (17, n) peuvent être commandés de manière individuelle et indépendamment les uns des autres dans le temps et la durée de sollicitation de la bande (16) qui doit être soumise à un traitement avec le milieu de décapage (14a) peut être réglée de manière individuelle en fonction de son type d'acier, et en ce que les modules de décapage par pulvérisation (17, n) peuvent être mis en circuit et hors circuit de manière individuelle en ce qui concerne leur nombre et/ou l'intensité de la pulvérisation en fonction des types d'acier à traiter de la bande (16) qui doit être traitée.

2. Installation de décapage selon la revendication 1, **caractérisée en ce que** les modules de décapage par pulvérisation (17, n) représentent des cellules de décapage par pulvérisation qui présentent une structure analogue pour autant que faire se peut, qui peuvent être alimentées avec un milieu de décapage (14a) à partir d'au moins une cuve de circulation (21) ou à partir de collecteurs intégrés.

3. Installation de décapage selon la revendication 2, **caractérisée en ce que**, entre les cellules de décapage par pulvérisation (17, n), on prévoit un support de bande (26) au moyen de rouleaux ou de pierres granitiques.

4. Installation de décapage selon l'une des revendications 1 et 2, **caractérisée en ce que** le premier et le deuxième module faisant office de bain d'immersion représentent des cuves de décapage par turbulence (13, 23).

5. Installation de décapage selon la revendication 4, **caractérisée en ce qu'**au moins dans une cuve de décapage par turbulence (13), la concentration d'acide libre (14) se situe dans la plage de 30 à 40 g de HCl/I, d'une manière telle que l'effet de décapage soit minime sur une bande qui doit être traitée.

6. Installation de décapage selon la revendication 5, **caractérisée en ce que** la première cuve de décapage par turbulence (13) représente un préchauffage de la bande.

7. Installation de décapage selon la revendication 6, **caractérisée en ce que**, dans la première cuve de turbulence (113) on élimine les composants grossiers insolubles de la calamine qui provient de la surface de la bande (16) avant l'entrée de la bande (16) dans les cellules de décapage par pulvérisation (17, n) qui sont montées à la suite.
